# EUROPÄISCHE PATENTSCHRIFT

(11) **EP 4 088 562 B1**
(45) Veröffentlichungstag und Bekanntmachung des Hinweises auf die Patenterteilung: **25.12.2024**
(21) Anmeldenummer: 22172211.9
(22) Anmeldetag: 09.05.2022
(51) Int. Cl.: A01F 15/08, B65G 33/30

(54) **PRESSE MIT SCHNECKENFÖRDERER**
PRESS WITH SCREW CONVEYOR
PRESSE AVEC TRANSPORTEUR À VIS SANS FIN

(30) Priorität: 11.05.2021 DE 102021112210
(43) Veröffentlichungstag der Anmeldung: 16.11.2022
(73) Patentinhaber: Deere & Company, Moline, IL 61265 (US)
(72) Erfinder: Dutertre, Matthieu, 68163 Mannheim (DE)
(74) Vertreter: Stein, Stefan

(56) Entgegenhaltungen:
- EP-A1- 0 510 499
- DE-A1- 4 019 335
- US-A1- 2016 286 726
- US-A1- 2021 084 824

## Beschreibung

Die vorliegende Erfindung betrifft eine Presse, insbesondere eine landwirtschaftliche Ballenpresse, mit wenigstens einer Rolle auf deren Umfangsfläche zur Förderung von Material die Rolle zumindest bereichsweise gegensinning umschlingende Schneckenwendel vorgesehen sind, und mit wenigstens einer Walze, einem die Walze umschlingenden, flexiblen Pressmittel und wenigstens einem Schneckenförderer.

Schneckenförderer sind bekannt. Sie werden beispielsweise an Pressen eingesetzt, um Material, insbesondere loses Gut zu fördern. Kommt ein Schneckenförderer an einer landwirtschaftlichen Presse zum Einsatz, so handelt es sich bei dem losen Gut meist um Erntegut, beispielsweise in der Art von Heu, Stroh oder Silage. Handelt es sich bei der Presse um eine industrielle Presse, kann diese beispielsweise zum Pressen von Papier, Pappe, Abfall oder Textilien Verwendung finden. Derartige Schneckenförderer erstrecken sich üblicherweise über die Breite eines Pressraums der Presse und sind als Rolle ausgebildet, auf deren Oberfläche zwei gegenläufig fördernde Schneckenwendel angeordnet sind. Der Schneckenförderer wird im Betrieb der Presse in Drehung versetzt, so dass die Schneckenwendel das lose Gut mitnehmen, um es in einen vorbestimmten Bereich des Pressraums zu verbringen. Dabei handelt es sich üblicherweise um einen Randbereich oder einen Mittenbereich des Pressraums. Dort wird das Gut oder Material dann, gegebenenfalls erneut, dem zu pressenden Materialstrom zugeführt. So zeigt beispielsweise die DE-A1-4113311 einen Schneckenförderer, der in unmittelbarer Nähe einer Rolle vorgesehen ist, sich auf der Rolle ansammelndes Material abstreift und es einer Abgabestelle zuführt.

Weitere Pressen und Schneckenförderer sind z.B. aus folgenden Dokumenten bekannt: US 2016/286726 A1, DE 40 19 335 A1 und US 2021/084824 A1.

Bei bekannten Schneckenförderern bzw. bei Pressen mit derartigen Schneckenförderern kann es vorkommen, dass das Material, beispielsweise je nach Aufbau der Presse oder in Abhängigkeit von den jeweiligen Erntebedingungen, nicht optimal gefördert wird. Darüber hinaus oder alternativ kann es durch das sich ansammelnde/geförderte Material bzw. durch einen durch dieses auf das Pressmittel ausgeübten Druck je nach Aufbau der Presse zu verstärkter Abnutzung, beispielsweise in derart von Abrieb und/oder verstärktem Verschleiß, insbesondere des Pressmittels, kommen.

Die der Erfindung zugrunde liegende Aufgabe wird daher darin gesehen, einen Schneckenförderer und eine Presse vorzusehen, durch welche die vorgenannten Nachteile überwunden werden.

Die Aufgabe wird erfindungsgemäß durch die Lehre des Patentanspruchs 1 gelöst.

Weitere vorteilhafte Ausgestaltungen und Weiterbildungen der Erfindung gehen aus den Unteransprüchen hervor.

Diesbezüglich weist ein Schneckenförderer für eine Presse wenigstens eine Rolle auf, auf deren Umfangsfläche zur Förderung von Material die Rolle zumindest bereichsweise gegensinnig umschlingende Schneckenwendel vorgesehen sind. Die Schneckenwendel sind derart ausgebildet, dass sie das Material in zwei außerhalb eines Mittenbereichs des Schneckenförderes angeordneten Sammelbereichen zusammenführen, wodurch die Förderung des Materials verbessert und so einer übermäßigen Belastung eines Pressmittels in einem Mittenbereich des Schneckenförderers und gegebenenfalls einem erhöhten Verschleiß vorgebeugt werden kann. Bei der Presse kann es sich insbesondere um eine landwirtschaftliche Presse, beispielsweise eine Presse zur Bildung rundzylindrischer Ballen handeln. Bei dem zu pressenden Gut handelt es sich insbesondere um Heu, Stroh oder Silage. Es ist aber auch denkbar, dass die Presse als industrielle Presse ausgebildet ist, wie sie beispielsweise zum Bilden von Ballen aus Abfällen, Papier oder Textilien eingesetzt wird.

Besonders günstig ist es, wenn zwei Schneckenwendel vorgesehen sind, welch einander vorzugsweise zumindest bereichsweise überlappen. Bei einer derartigen Ausgestaltung sammelt sich das Material in den Bereichen in denen die Überlappung endet. Besonders günstig ist es, wenn die Schneckenwendel zumindest im Wesentliche in einem Mittenbereich der Rolle überlappen. Auf diese Weise fördern bzw. verteilen die Schneckenwendel, insbesondere bei einer gegensinnigen Anordnung, das Material über den Mittenbereich bzw. über diesen hinaus und es wird einer Ansammlung von Material in dem Mittenbereich vorgebeugt.

Besonders günstig ist es, wenn die Sammelbereiche zumindest im Wesentlich angrenzend an den Mittenbereich vorgesehen sind. Endet dabei jeweils eine der Schneckenwendel in einem der Sammelbereiche, so fördert sie von ihr mitgeführtes Material bis in diesen Sammelbereich, wo es mit von der anderen Schneckenwendel gefördertem Material zusammengeführt wird.

Ein besonders einfacher Aufbau und/oder eine besonders gleichmäßige Förderung des Materials ergibt sich, wenn der Schneckenförderer und/oder die Schneckenwendel symmetrisch, insbesondere symmetrisch zu einer Mittelachse des Schneckenförderers ausgebildet ist/sind, welche vorzugsweise senkrecht zu einer Drehachse des Schneckenförderers ausgerichtet ist.

Es ist vorteilhaft, wenn eine Presse mit wenigstens einer Walze und einem die wenigstens eine Walze umschlingenden, flexiblen Pressmittel einen zuvor beschriebenen Schneckenförderer aufweist. Auf diese Weise kann Material, welches sich beispielsweise einerseits des Pressmittels ansammelt, in zwei Sammelbereichen zusammengeführt und von dort einem Materialstrom bzw. einem Pressprozess zugeführt werden, ohne dass es zu einer Überlastung und/oder erhöhten Abnutzung der Presse bzw. des Pressmittels kommt. Bei der Presse handelt es sich insbesondere um eine landwirtschaftliche Ballenpresse zur Bildung rundzylindrischer Ballen, insbesondere aus Erntegut wie beispielsweise Heu, Stroh oder Silage. Eine derartige Presse kann von einem anderen Fahrzeug gezogen werden oder auch selbstfahrend ausgebildet sein. Eine derartige Presse kann alternativ aber auch im industriellen Bereich, beispielsweise zur Bildung von Ballen aus Papier, Müll, Stoff oder anderen Materialien eingesetzt werden.

Erfindungsgemäß weist die Presse einen variablen Pressraum auf, dieser wird bereichsweise von dem Pressmittel gebildet. Dabei weist das Pressmittel eine dem Pressraum zugewandte Innenseite und eine dem Pressraum abgewandte Außenseite auf. Vorzugsweise ist der Schneckenförderer auf der Außenseite des Pressmittels angeordnet, so dass er sich an/auf der Außenseite ansammelndes Gut bzw. Material in den zwei Sammelbereichen zusammenführt.

Das Pressmittel kann einteilig ausgebildet sein. Erfindungsgemäß vorgesehen ist es aber, dass das Pressmittel eine Mehrzahl von, insbesondere aber drei Pressriemen aufweist, wobei vorzugsweise wenigstens zwischen zweien der Pressriemen ein Spalt vorgesehen ist. Korreliert wenigstens einer diese Spalte zumindest im Wesentlichen mit einem der Sammelbereiche des Schneckenförderers, so kann sich in dem Sammelbereich befindliches Gut durch den Spalt von einer Seite des Pressmittels auf dessen andere Seite bzw. zu einem Einlass der Presse gelangen, von wo aus es vorzugsweise dem Pressraum bzw. einem Pressprozess zugeführt werden kann.

Ist der Schneckenförderer zumindest im Wesentlichen angrenzend an die eine Walze vorgesehen, so kann er mit dieser interagieren, beispielsweise in der Art, dass er einer Anlagerung/Anhaftung von Material/Gut an der Walze vorbeugt bzw. an der Walze anhaftendes Gut mitnimmt und/oder von dieser entfernt. Ist die wenigstens eine Walze bzw. der Schneckenförderer oberhalb eines Einlasses in den Pressraum angeordnet, so kann von dem Schneckenförderer gefördertes und/oder von der Walze entferntes Material/Gut über den Einlass in den Pressraum gelangen und einem Pressprozess zugeführt werden.

Es ist denkbar, dass der Schneckenförderer nur bereichsweise in den Pressraum, beispielsweise nur in einen Randbereich ragt. Eine besonders gleichmäßige Förderung ergibt sich aber, wenn der Schneckenförderer sich zumindest im Wesentlichen über die Breite des Pressraums erstreckt. Der Schneckenförderer und/oder die Walze können dabei oder auch alternativ mit Bezug auf die Presse als solche bzw. einen Rahmen der Presse beweglich vorgesehen sein. Besonders günstig ist es aber, wenn der Schneckenförderer oder die Walze und insbesondere sowohl der Schneckenförderer als auch die Walze stationär vorgesehen ist/sind.

In vorteilhafter Weise sind die Walze und/oder der Schneckenförderer antreibbar vorgesehen. Besonders günstig ist es, wenn der Schneckenförderer derart angetrieben werden kann, dass das zu fördernde Material durch die Schneckenwendel in Richtung des Mittenbereichs gefördert wird. In geeigneten Anwendungsfällen ist alternativ aber auch eine Förderung in Richtung von Endbereichen des Schneckenförderers denkbar.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: eine Seitenansicht einer Presse mit mehreren in einem Gehäuse angeordneten Walzen, einem diese umschlingenden Pressmittel und einem Schneckenförderer,
- Fig. 2: eine vergrößerte dreidimensionale Ansicht des Schneckenförderers, einer angrenzenden Walze und des diesen umschlingenden Pressmittels und
- Fig. 3: den Schneckenförderer aus Figur 1.

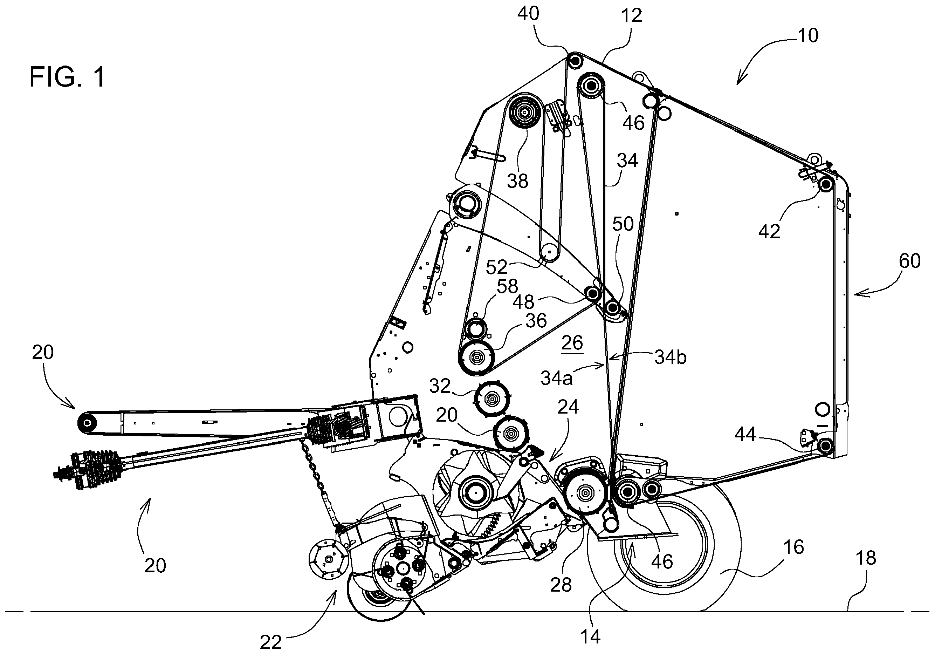

In der Figur 1 der Zeichnung ist eine Ausführungsform einer Presse 10 dargestellt, die einen ein Gehäuse 12 tragenden Rahmen 14 aufweist, der sich über ein Fahrwerk 16 auf dem Untergrund 18 abstützt. Die gezeigte Presse 10 ist in der Art einer Rundballenpresse ausgebildet und kann sowohl im landwirtschaftlichen als auch im industriellen Bereich zur Herstellung eines üblicherweise als Rundballen bezeichneten, insbesondere rundzylindrischen Ballens aus Erntegut, aber auch aus Müll, Papier, Stoff bzw. Gewebe, Baumwolle, Tabak etc. eingesetzt werden. Eine solche Presse 10 kann von einem nicht gezeigten Arbeitsfahrzeug, vorzugsweise in der Art eines Ackerschleppers, gezogen werden oder auch selbstfahrend ausgebildet sein.

Gemäß dem vorliegenden Ausführungsbeispiel ist an der Vorderseite des Rahmens 14 eine Deichsel 20 vorgesehen, um die Presse 10 an einen nicht gezeigten Ackerschlepper anhängen und über ein Feld ziehen zu können. Eine Aufnahmevorrichtung 22 in Form einer Pick-Up dient zur Aufnahme von auf dem Untergrund 18 liegenden Erntegut, z.B. von in einem Schwad abgelegten Heu oder Stroh. Das von der Aufnahmevorrichtung 22 aufgenommene Erntegut wird über einen Einlass 24 einem Pressraum 26 zugeführt und dort spiralförmig zu einem rundzylindrischen Ballen aufgerollt, gebunden und anschließend auf dem Untergrund 18 abgelegt.

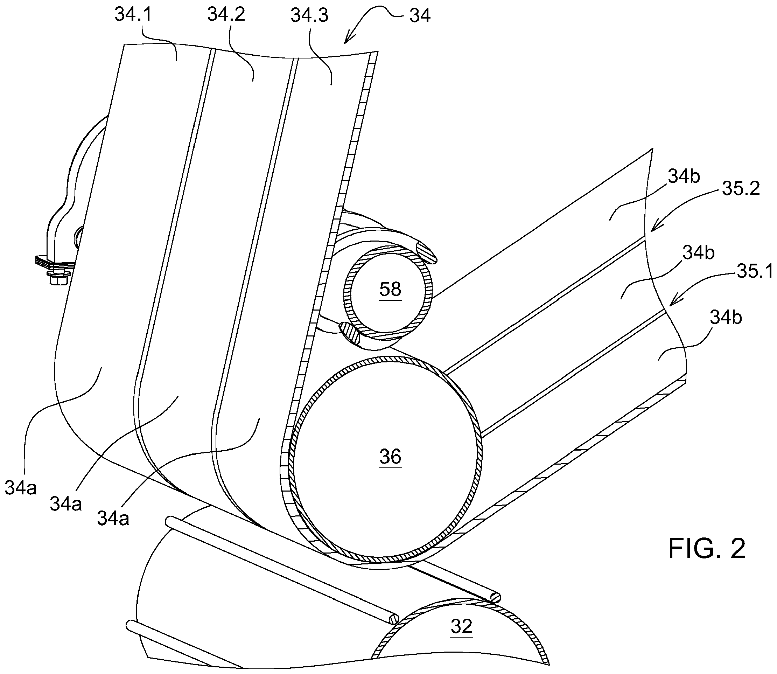

Am Einlass 24 des Pressraums 26 sind eine untere, stationäre Rolle 28 und zwei obere Rollen 30, 32 positioniert. Der Pressraum 26 wird weiterhin durch ein endlose Pressmittel 34 gebildet, das gemäß der vorliegenden Ausführungsform in der Art von drei nebeneinander liegenden Pressriemen 34.1, 34.2, 34.3 (siehe Figur 2 der Zeichnung) ausgeführt ist und um eine ortsfeste Walze 36 und eine Mehrzahl ortsfester und beweglicher Walzen 38, 40, 42, 44, 46, 48, 50, 52, 54, 56 geführt wird. Das Pressmittel 34 weist eine dem Pressraum 26 zugewandte Innenseite 34a und eine Außenseite 34b auf. Jeweils zwei Pressriemen 34.1, 34.2, 34.3 begrenzen zwischen sich einen Spalt 35.1, 35.2. An die ortsfeste Walze 36 angrenzend ist auf der Außenseite 34b des Pressmittels 34 ein Schneckenförderer 58 vorgesehen, auf den im Folgenden noch genauer eingegangen wird.

Während der Pressraum 26 umfangsseitig im Wesentlichen von dem Pressmittel 34 und den Rollen 28, 30 und 32 umgeben wird, wird er seitlich von nicht gezeigten Seitenwänden begrenzt.

Das Pressmittel 34 nimmt einen Anfangszustand ein, in dem es gerade gestreckt den Einlass 24 überbrückt, und einen Endzustand, in dem es sich wie eine große Schlaufe um einen nicht gezeigten Ballen schlingt. Der Pressraum 26 ist somit in seiner Größe veränderlich, d. h. sein Durchmesser nimmt mit der Größe des Ballens zu. Der Ballen befindet sich während seiner Bildung in dem Pressraum 26 und wird von dem Pressmittel 34 größtenteils umschlungen, fällt aber aus dem Pressraum 26 nach hinten auf den Untergrund 18, sobald der Ballenbildungsprozess abgeschlossen und eine gegen den Uhrzeigersinn schwenkbare Auswurfklappe 60 der Ballenpresse 10 öffnet.

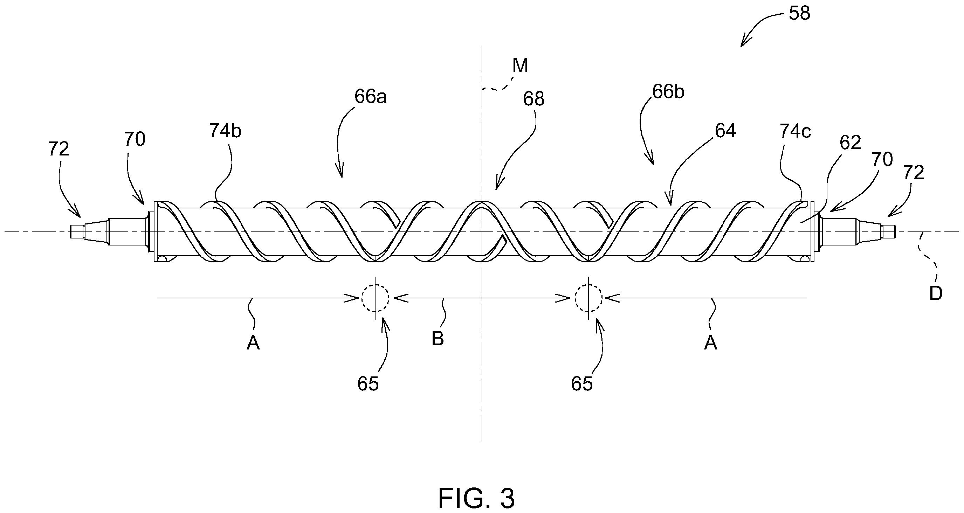

Es wird nun auch auf die Figur 3 der Zeichnung Bezug genommen, in der der Schneckenförderer 58, welcher an die Walze 36 angrenzend, außerhalb des durch das Pressmittel 34 bestimmten Pressraums 26 vorgesehen ist, genauer dargestellt wird. Gemäß der gezeigten Ausführungsform weist der Schneckenförderer 58 einen zylindrischer Hohlkörper bzw. eine Rolle 62, mit einer Umfangsfläche 64, einem ersten und einem zweiten Randbereich 66a, b, einem Mittenbereich 68 und Stirnflächen 70a, b auf. An die Stirnflächen 70a, b der Rolle 62 schließen Endbereiche 72 an, welche derart ausgebildet sind, dass sie in nicht gezeigten Lagern an dem Rahmen 14 der Ballenpresse 10 drehbar aufgenommen werden können. Der Schneckenförderer 58 kann darüber hinaus im Betrieb mittels eines nicht dargestellten Antriebs in Rotation versetzt werden.

Auf der Umfangsfläche 64 der Rolle 62 sind eine erste und eine zweite Schneckenwendel 74a, b vorgesehen, welche die Rolle 62 ausgehend von den Stirnflächen 70a, b in Richtung des Mittenbereichs 68 umschlingen. Die Schneckenwendel 74a, b umschlingen die Rolle 62 dabei gegensinnig, das heißt, die erste Schneckenwendel 74a umschlingt die Rolle 62 von der Stirnfläche 70a aus betrachtet gegen den, die zweite Scheckenwendel 74b von der Stirnfläche 70b aus betrachtet im Uhrzeigersinn. Beide Schneckenwendel 74a, b erstrecken sich über eine Mittelachse M der Rolle 62 hinaus, so dass sie sich in dem Mittenbereich 68 überlappen und in jeweils einem an den Mittenbereich 68 angrenzenden Sammelbereich 69 enden bzw. auslaufen.

Diese Sammelbereiche 69 sind derart angeordnet, dass sie mit Spalten 35.1, 35.2 zwischen den einzelnen Pressriemen 34.1, 34.2, 34.3 korrelieren.

### Funktionsweise:

Im Betrieb wird der Schneckenförderer 58 durch den nicht gezeigten Antrieb derart in Drehung versetzt, dass sich an der Außenseite 34b außerhalb des Pressraums 26 befindliches Material von den Schneckenwendeln 74a, b in Richtung des Mittenbereichs 68 des Schneckenförderers 58 gefördert wird . Dies wird in Figur 3 der Zeichnung durch die von den Stirnflächen 70a, b zum Mittenbereich 68 des Schneckenförderers 58 hin zeigenden Pfeile A verdeutlicht.

Sich im Mittenbereich 68 ansammelndes Gut wird durch die überlappende Anordnung der Schneckenwendel 74a, b im Mittenbereich 68 in Richtung der Stirnflächen 70a, b gefördert, wie es durch die Pfeile B angedeutet wird.

Durch die gegenläufigen Förderrichtungen der Schneckenwendel 74a, b wird das Material in den Sammelbereichen 69 zusammengeführt. Da die Sammelbereich 69 a, b derart angeordnet sind, dass sie mit den Spalten 35.1, 35.2 zwischen Pressriemen 34.1, 34.2, 34.3 korrelieren, kann das in den Sammelbereichen 69 zusammengeführte und sich dort ansammelnde Materials durch die Spalte 35.1, 35.2 hindurch treten, um zurück in den Einlass 24 der Presse 10 zu gelangen. Über den Einlass 24 gelangt das Material dann in den Pressraum 26 und wird dem eigentlichen Pressprozess zugeführt.

### Wortliste

| | | | |
|---|---|---|---|
| 10 | Presse | 36 | ortsfeste Walze |
| 12 | Gehäuse | 38 - 56 | Walzen |
| 14 | Rahmen | 58 | Schneckenförderer |
| 16 | Fahrwerk | 60 | Auswurfklappe |
| 18 | Untergrund | 62 | Rolle |
| 20 | Deichsel | 64 | Umfangsfläche |
| 22 | Aufnahmevorrichtung | 66a, b | Randbereich |
| 24 | Einlass | 68 | Mittenbereich |
| 26 | Pressraum | 69 | Sammelbereich |
| 28 | untere stationäre Rolle | 70a, b | Stirnflächen |
| 30 | erste obere stationäre Rolle | 72 | Endbereiche |
| 32 | zweite obere stationäre Rolle | 74a, b | Schneckenwendel |
| 34 | Pressmittel | M | Mittenachse |
| 34.1, 2, 3 | Pressriemen | D | Drehachse |
| 34a | Innenseite | A, B | Pfeile |
| 34b | Außenseite | | |
| 35.1, 35.2 | Spalt | | |

## Patentansprüche

1. Presse (10), insbesondere eine landwirtschaftliche Ballenpresse, mit wenigstens einer Walze (36) einem die Walze (36) umschlingenden, flexiblen Pressmittel (34) und wenigstens einem Schneckenförderer (58), wobei die Presse (10) einen variablen Pressraum (26) aufweist, der bereichsweise von dem Pressmittel (34) gebildet wird, wobei das Pressmittel (34) eine dem Pressraum (26) zugewandte Innenseite (34a) und eine dem Pressraum (26) abgewandte Außenseite (34b) aufweist und der Schneckenförderer (58) vorzugsweise auf der Außenseite (34b) des Pressmittels (34) angeordnet ist, wobei das Pressmittel (34) eine Mehrzahl von, insbesondere aber drei Pressriemen (34.1, 34.2, 34.3) aufweist, wobei der Schneckenförderer (58) wenigstens eine Rolle (62) aufweist, auf deren Umfangsfläche (64) zur Förderung von Material zumindest bereichsweise gegensinning umschlingende Schneckenwendel (74a,b) vorgesehen sind, **dadurch gekennzeichnet, dass** die Schneckenwendel (74a, b) derart ausgebildet sind, dass sie das Material in zwei außerhalb eines Mittenbereichs (68) des Schneckenförderes angeordneten Sammelbereichen (69) zusammenführen, wobei zwischen wenigstens zwei der Pressriemen (34.1, 34.2, 34.3.) ein Spalt (35.1, 35.2) vorgesehen ist, welcher mit einem der Sammelbereiche (69) des Schneckenförderers (58) korreliert.

2. Presse (10) nach Anspruch 1, **dadurch gekennzeichnet, dass** zwei Schneckenwendel vorgesehen sind, die einander vorzugsweise bereichsweise, insbesondere aber zumindest in dem Mittenbereich (68) überlappen.

3. Presse (10) nach Anspruch 1 oder 2, **dadurch gekennzeichnet, dass** die Sammelbereiche (69) angrenzend an den Mittenbereich (68) vorgesehen sind, wobei jeweils eine der Schneckenwendel (74a,b) in einem der Sammelbereiche (69) endet.

4. Presse (10) nach einem der vorherigen Ansprüche, **dadurch gekennzeichnet, dass** die Sammelbereiche (69) symmetrisch zu einer Mittelachse (M) des Schneckenförderers (58) und/oder der Schneckenförderer (58) bzw. die Schneckenwendel (74a,b) symmetrisch, insbesondere zu der Mittelachse (M) ausgebildet ist/sind, wobei die Mittelachse (M) senkrecht zu einer Drehachse (D) des Schneckenförderers (58) ausgerichtet ist.

5. Presse nach mindestens einem der vorangehenden Ansprüche, **dadurch gekennzeichnet, dass** der Schneckenförderer (58) angrenzend an die Walze (36) vorgesehen ist und/oder die wenigstens eine Walze (36) und/oder der Schneckenförderer (58) oberhalb eines Einlasses (24) in den Pressraum (26) angeordnet ist.

6. Presse nach mindestens einem der vorangehenden Ansprüche, **dadurch gekennzeichnet, dass** der Schneckenförderer (58) sich zumindest im Wesentlichen über die Breite des Pressraums (26) erstreckt und/oder mit Bezug auf den Pressraum (26) stationär angeordnet ist.

7. Presse nach mindestens einem der vorangehenden Ansprüche, **dadurch gekennzeichnet, dass** die Walze (36) und/oder der Schneckenförderer (58) antreibbar vorgesehen sind.

## Claims

1. Press (10), in particular an agricultural baler, having at least one roller (36), a flexible pressing means (34) winding around the roller (36) and at least one worm conveyor (58), wherein the press (10) has a variable pressing chamber (26) which is formed, in some regions, by the pressing means (34), wherein the pressing means (34) has an inner face (34a) facing the pressing chamber (26) and an outer face (34b) remote from the pressing chamber (26), and the worm conveyor (58) is preferably arranged on the outer face (34b) of the pressing means (34), wherein the pressing means (34) has a plurality of, but in particular three, pressing belts (34.1, 34.2, 34.3), wherein the worm conveyor (58) has at least one roll (62), screw flights (74a, b) winding in opposing directions at least in some regions around the roll being provided on the peripheral surface (64) thereof for conveying material, **characterized in that** the screw flights (74a, b) are configured such that they bring together the material in two collecting regions (69) arranged outside a central region (68) of the worm conveyor, wherein a gap (35.1, 35.2) is provided between at least two of the pressing belts (34.1, 34.2, 34.3), said gap correlating with one of the collecting regions (69) of the worm conveyor (58).

2. Press (10) according to Claim 1, **characterized in that** two screw flights are provided, said screw flights preferably overlapping one another in some regions, in particular, however, at least in the central region (68).

3. Press (10) according to Claim 1 or 2, **characterized in that** the collecting regions (69) are provided to be adjacent to the central region (68), wherein in each case one of the screw flights (74a, b) terminates in one of the collecting regions (69).

4. Press (10) according to any one of the preceding claims, **characterized in that** the collecting regions (69) are configured symmetrically to a central axis (M) of the worm conveyor (58) and/or the worm conveyor (58) or the screw flights (74a, b) is/are configured symmetrically, in particular to the central axis (M), wherein the central axis (M) is oriented perpendicular to a rotational axis (D) of the worm conveyor (58).

5. Press according to at least one of the preceding claims, **characterized in that** the worm conveyor (58) is provided to be adjacent to the roller (36) and/or the at least one roller (36) and/or the worm conveyor (58) is arranged above an intake (24) into the pressing chamber (26) .

6. Press according to at least one of the preceding claims, **characterized in that** the worm conveyor (58) extends at least substantially over the width of the pressing chamber (26) and/or is arranged in a stationary manner relative to the pressing chamber (26).

7. Press according to at least one of the preceding claims, **characterized in that** the roller (36) and/or the worm conveyor (58) are provided to be drivable.

## Revendications

1. Presse (10), notamment presse à balles agricole, avec au moins un rouleau (36), un moyen de pressage (34) flexible entourant le rouleau (36) et au moins un transporteur à vis (58), la presse (10) présentant un espace de pressage (26) variable, qui est formé par zones par le moyen de pressage (34), le moyen de pressage (34) présentant un côté intérieur (34a) tourné vers l'espace de pressage (26) et un côté extérieur (34b) détourné de l'espace de pressage (26) et le transporteur à vis (58) étant agencé de préférence sur le côté extérieur (34b) du moyen de pressage (34), le moyen de pressage (34) présentant une pluralité, mais notamment trois courroies de pressage (34.1, 34.2, 34.3), le transporteur à vis (58) présentant au moins un rouleau (62) sur la surface périphérique (64) duquel sont prévues des hélices de vis (74a, b) s'enroulant en sens inverse au moins par zones pour le transport de matériau, **caractérisée en ce que** les hélices de vis (74a, b) sont réalisées de telle sorte qu'elles rassemblent le matériau dans deux zones de collecte (69) agencées à l'extérieur d'une zone centrale (68) du transporteur à vis, il étant prévu une fente (35.1, 35.2) entre au moins deux des courroies de pressage (34.1, 34.2, 34.3.), qui est en corrélation avec l'une des zones de collecte (69) du transporteur à vis (58) .

2. Presse (10) selon la revendication 1, **caractérisée en ce qu'**il est prévu deux hélices de vis qui se chevauchent de préférence par zones, mais notamment au moins dans la zone centrale (68).

3. Presse (10) selon la revendication 1 ou 2, **caractérisée en ce que** les zones de collecte (69) sont prévues de manière adjacente à la zone centrale (68), chacune des hélices de vis (74a, b) se terminant dans l'une des zones de collecte (69).

4. Presse (10) selon l'une quelconque des revendications précédentes, **caractérisée en ce que** les zones de collecte (69) sont symétriques par rapport à un axe central (M) du transporteur à vis (58) et/ou le transporteur à vis (58) ou l'hélice de vis (74a, b) est/sont symétrique(s), notamment par rapport à l'axe central (M), l'axe central (M) étant orienté perpendiculairement à un axe de rotation (D) du transporteur à vis (58).

5. Presse selon au moins l'une quelconque des revendications précédentes, **caractérisée en ce que** le transporteur à vis (58) est prévu adjacent au rouleau (36) et/ou l'au moins un rouleau (36) et/ou le transporteur à vis (58) est agencé au-dessus d'une entrée (24) dans la chambre de pressage (26).

6. Presse selon au moins l'une quelconque des revendications précédentes, **caractérisée en ce que** le transporteur à vis (58) s'étend au moins essentiellement sur la largeur de la chambre de pressage (26) et/ou est agencé de manière stationnaire par rapport à la chambre de pressage (26).

7. Presse selon au moins l'une quelconque des revendications précédentes, **caractérisée en ce que** le rouleau (36) et/ou le transporteur à vis (58) sont prévus pour pouvoir être entraînés.
